# EUROPEAN PATENT APPLICATION

(11) **EP 3 228 366 A1**
(43) Date of publication of application: **11.10.2017**
(21) Application number: 14907229.0
(22) Date of filing: 04.12.2014
(51) Int. Cl.: A62D 1/06, C09K 21/14, B01J 13/02

(54) **MICROCAPSULES, METHOD FOR PRODUCING THEREOF AND FLAME RETARDANT AGENTS, MATERIALS, COATINGS AND PRODUCTS BASED THEREON**

(71) Applicant: Limited Liability Company "Rusintech", Moscow, 117405 (RU)
(72) Inventor: VILESOV, Aleksandr Dmitrievich, St.Petersburg 197046 (RU); VILESOVA, Marina Sergeevna, St.Petersburg 197046 (RU); KOLTSOV, Yury Stanislavovich, St.Petersburg 196135 (RU)
(74) Representative: Jeck, Anton
(86) International application number: PCT/RU2014/000907
(87) International publication number: WO 2016/089240

(57) **Abstract**

The technical problem to be solved: (a) to increase stability of microcapsules having a core comprising a target lyophilic liquid with a low boiling point and which is immiscible with water, wherein said liquid is characterised in that it has the ability to hydrolyze and to form acidic products, said core being comprised in a spherical shell made of cured cross-linked polymeric material, which shell releases said target liquid when the surrounding environment has certain parameters leading to destruction of said shell; (b) to prevent the loss of the target liquid; and (c) to preserve microcapsule characteristics during long storage periods thereof. For this purpose the invention provides a method for producing microcapsules wherein a stabilising agent is added to the liquid to be encapsulated, which stabiliser suppresses the development of acidity during emulsification, coacervation and coalescence stages in a droplet of the liquid to be encapsulated and on the phase interface.

## Description

### Field of the Invention

The present invention is related to the field of microencapsulation of liquids; in particular, to the preparation methods of a microcapsule, wherein the liquid core is a low-boiling liquid, immiscible with water, wherein said core is enclosed within a spherical shell that breaks up at a certain temperature; and to the field of fire extinguishing, more specifically, to the preparation methods of fire-extinguishing agents as powders of microcapsules, said microcapsules comprising a core prepared from a fire-extinguishing liquid evaporable at certain elevated temperatures; said core enclosed within a shell having certain barrier functions; and to the composite fire-extinguishing materials, coatings, and fire-extinguishing articles comprising said fire-extinguishing agents.

### Prior Art

There is an current need to create a microencapsulation method of various target products that yield microcapsules stable under certain environmental conditions and encased inside a shell, which does not affect the properties of the target material comprised therein, wherein said shell ensures a release of the target product under certain external impact conditions, which lead to the breakup of said shell, wherein said products are stable in the absence of such conditions.

Solving the problem of microencapsulating low-boiling liquids or the liquids easily evaporable under heat is rooted in solving the problem of creating highly durable shells with low permeability, which extend prolonged stability of the microcapsules, while allowing the liquid encapsulated inside the shell to maintain its properties during storage and application thereof. A the same time, said shell must be destructed or opened at a certain temperature or other certain external impact conditions in order to provide the most efficient release and use of the liquid encapsulated within the microcapsule, as well as allow for a simultaneous release of the microcapsule content, for example, during explosive breakup of the shells of the microcapsules at certain environmental temperatures.

Existing microencapsulation methods for low-boiling water-immiscible liquids that evaporate with heating, which mostly include, among others, known fire-extinguishing liquids, solve said problem by using coacervation-based methods The first step in this universal process is to prepare emulsions of lyophilic liquids to be microencapsulated and aqueous solutions of the polymers of future shells followed by separation of the phases with forced pH changes of the reaction mixture, with the release of the so-called coacervation drops enriched with the polymer, wherein said drops accumulate on the surface of the capsulated liquid as a "necklace" and then coalesce (merge) into an unbroken liquid shell, which is then cured by linking agents and dried, yielding a microcapsule.

Various microcapsules prepared by such methods are known in the art.

For example, there is a known microcapsule used in manufacturing of disinfecting and repelling compositions and air fresheners comprising essential oils inside a spherical core, wherein the shell encapsulating said essential oil droplets is a thin outer polymeric polyurea or polyurethane membrane film that regulates the release of the essential oils and shields them from oxidation and evaporation as well as ensures the release of the effective dose of the oils at a constant fixed speed over an extended time period (RU, 2347608, C2). However, while achieving the desired breakup rate of the microcapsule shells or providing the desired permeability thereof, maintaining the desired stability of the shells was secondary, and the prepared microcapsules weren't sufficiently stable under mechanical or temperature loads and after long storage and use.

There is also a known microcapsule used in vulcanization of natural and synthetic rubbers (RU, 2376058, C2), comprising a core containing at least one additive for the rubber in the polymeric capsule wall formed by melamine formaldehyde resin and polyurea resin and by polyelectrolyte. The microcapsule is thermally and mechanically stable at up to 120-140 °C. However, at higher temperatures, the speed and temperature of the breakup of the microcapsule shells is not the same for all microcapsules, which can affect the vulcanization process of rubbers.

There are also known application methods of fire-extinguishing evaporable liquids selected from the group comprising liquid perfluoroethyl perfluoroisopropyl ketone and dibromomethane approved for use and their mixture, by encapsulating them into microcapsules, which serve as hollow microspheres having diameters from several microns to several hundreds microns, which break up at elevated temperatures, especially, during combustion in the environment, followed by the fire extinguisher release into the fire zone (RU, 2469761.C1 ; RU, 2389525, C1).

There are known methods for microencapsulation of liquid evaporable halogen-substituted hydrocarbons, which include simple or complex coacervation producing gelatinous shells of various compositions (M.S. Vilesova, M.S. Bosenko, A.D. Vilesov, et al. Development of Microencapsulated and Gelatinous Products and Materials for Various Manufacturing Areas. Russian Chemical Journal, Volume XLV , # 5-6, 2001, pp. 125-129; RU, 2161520, C1; RU, 2382595, C1; RU, 2469761 ,C1) and ureaformaldehyde-resorcinol resin shells (M.S. Vilesova, R.P. Stankevich, M.S. Bosenko, et al. Russian Chemical Journal, volume XLV, # 5-6, 2001, p. 131 ; US, 3755190, B1 ; RU, 2469761, C1 ; RU, 2389525, C1).

There is also a known microencapsulated fire extinguishing agent, which is approved for use in the ozone layer and which is dispersed in a thermosetting polymer binder (RU, 2161520, C1), wherein the microcapsule is a microsphere 100-400 mcm in diameter having a spherical shell of cured gelatin and a fire-extinguishing agent encapsulated within said shell, said fire-extinguishing agents are substances belonging to the halogen-substituted class and some perfluoro amines. The microcapsules break up in the 130-149 °C and 166-190 °C temperature ranges. The attained stability of the microcapsules, however, turned out to be insufficient for practical application of the fire-extinguishing agent.

There is a known method for the microencapsulation of liquid evaporable substances inside a double shell of "polysiloxane and gelatin" (RU 2389525, C1), providing a certain stabilizing effect to dibromomethane-containing microcapsules. It was later shown, however, that said method does not produce stable microcapsules when other low-boiling liquids are used, and it is inadequate for technical applications of microcapsules.

Fire-extinguishing composite materials, which are polymer matrices filled with microcapsules comprising evaporable fire-extinguishing liquids, have technical and commercial applications. Such composite materials, manufactured in very different forms (plates, film, formed parts, paints, coated fabrics, etc.), autonomously and pre-ventively protect various objects from catching fire.

There is also a known application of microencapsulated 1,1,2,2- tetrafluoro dibromomethane and 1,2 - dibromotetrafluoroethane in the composition for fire-extinguishing coatings (RU, 1696446, C; RU, 2403934, C1); there are also known fire-extinguishing foamed plastics (JP, 57-195128, A) with very small polymeric capsules containing liquid halogen-substituted hydrocarbons dispersed therein, wherein foaming is conducted at the temperature lower than the temperature of explosive breakup of said small polymeric capsules. There are also known fire-extinguishing oil paints and water-based paints (JP, 58- 132056, A), with very small polymeric capsules, containing halogen-substituted hydrocarbons mixed therein. In addition, the halogen-substituted hydrocarbons were dibromotetrafluoroethane, bromochloro-ethane, and bromochlorodifluoromethane. Said fire-extinguishing halogen-substituted hydrocarbon liquids, however, were later banned for manufacturing and use in accordance with the Montreal Protocol and the Kyoto Agreement (protecting the ozone layer and preventing the greenhouse effect).

Thus, the actual potential candidates for use turned out to be fluoro- and bromo- hydrocarbons and ketones, such as perfluoroethyl perfluoroisopropyl ketone and dibromomethane.

Additionally, some microcapsules containing said environmentally safe evaporable fire-extinguishing liquids were reduced in weight during their storage and application due to the loss of the fire-extinguishing liquid through the shells of the microcapsules during long storage, which compromised their efficiency during firefighting.

There is a known method to improve stability of the perfluoroethyl perfluoroisopropyl ketone (from here and infra "perfluoroketone") and dibromomethane microcapsules by incorporating into the composition of the shells of microcapsules nanoparticle-size plates of montmorillonite (RU, 2469761, C1), which leads to the significantly reduced loss of the fire-extinguishing liquid through the shell. However, the shelf life and warranty periods of fire-extinguishing liquids in microcapsules and fire-extinguishing materials are still very limited.

Thus, there is still a need to improve stability of microcapsules filled with liquid evaporable media.

Another problem that still needs to be addressed is the creation of effective microencapsulated fire-extinguishing agents convenient for use in firefighting, both as powders of microcapsules and as fillers, being part of the composition of the polymeric fire-extinguishing materials and products, which are sufficiently stable to warrant their commercially advantageous technical application.

### Disclosure of the Invention

The objective of the present invention is to develop a method for the preparation of microcapsules highly stable during storage and application, wherein the main indicator of stability is maintaining the initial weight of the microcapsule of the fire-extinguishing liquid inserted into the core, i.e. maintaining the weight of the microcapsule as a whole.

Experimental studies of the microencapsulation methods of low-boiling highly volatile evaporable liquids described above, which the present inventors conducted on perfluoroketone and dibromomethane, did not yield microcapsules with sufficient physical stability during their long-term storage and application.

The inventors discovered that instability of the microcapsules, both with the perfluoroketone and dibromomethane cores, prepared by the known methods, which was expressed in the loss of the low-boiling liquid due to its evaporation through the shell, is caused by the specific structure and physical and chemical properties of the molecules of such low-boiling substances, which negatively affect the structure and properties of the shell prepared by the known microencapsulation methods in aqueous media.

By analyzing various known coacervation-based microencapsulation methods of lyophilic, low-boiling, water-immiscible liquids, the inventors noticed that some of these liquids readily hydrolyze, yielding acid products, which include, among others, the fire-extinguishing liquids perfluoroethyl perfluoroisopropyl ketone (perfluoroketone, Novec 1230, and its domestic analog PFK-49) and dibromomethane. While microencapsulating water-insoluble lyophilic liquids (such as pefluoroketone and dibromomethane) in aqueous polymer solutions of future shells by a known coacervation method, the inventors observed a continuous reduction in the pH of the reaction mixture at the stage of the phase separation and isolation from the initial solution of coacervation drop polymers containing the most polymers that form the shell; which confirms that the uncontrolled influx of these lyophilic liquids into the medium of the acid products of said hydrolysis; said liquids causing a conformational transformation of the polymer in the coacervation drops, which, in turn, leads to the increase in the viscosity of the coacervation drops and, respectively, to the cessation or reduction of their possible convergence that would lead to the formation of unbroken flawless shells.

A microscopic study of the behavior of the obtained coacervation drops, which form a concentrated polymer solution, shows that when acidity of the reaction mixture goes up, the coacervation drops lose their ability to deform and merge into an unbroken shell; on the contrary, they form a "bead necklace" on the surface of the drop to be encapsulated leading to the formation of pores between said "beads" on said shell. Said microporous shell obtained after curing and drying cannot retain a highly volatile low boiling liquid of the core for a long time period.

A hydrolytic effect can be assumed to be characteristic of lyophilic liquids that can combine with water in small amounts. For instance, the highly volatile liquid dibromomethane and perfluoroketone can dissolve 1.2 and 1.0 wt. % of water respectively; said water then triggers their hydrolysis yielding acid products directly in the coalescence zone of the coacervates.

Based on the study results, the inventors concluded that prior to their microencapsulation in aqueous media, the lyophilic liquids have to be stabilized to prevent their hydrolysis.

The technical goal of the present invention was set to stabilize the properties of the target lyophilic low-boiling water-immiscible liquid to be encapsulated in the core of the microcapsule, which has a tendency to hydrolyze yielding acid products, and by doing so, improve the barrier properties of the shells in order to protect the core from evaporation, while improving the shell structure of microcapsules by increasing its density resulting from the formation of monolith shells due to the modification of its structure, and in particular, the degree of its porosity.

The expected technical result was increased stability of the microcapsules during their storage and application.

Said objective was achieved by creating a microcapsule containing a core comprising the target lyophilic low-boiling water-immiscible liquid with the characteristic ability to hydrolyze and yield acid products, said core located inside a spherical shell made from a cured cross-linked polymeric material, said shell promotes the release of said target liquid under certain external impact conditions that cause breakup of said shell, wherein said core additionally contains a stabilizer, which suppresses the creation of an acidic environment in the area of shell formation.

Additionally, according to the present invention, the microcapsules can explosively break up in the temperature range between 90 °C and 230 °C. Moreover, according to the present invention, the shell can be made from cross-linked gelatin.

Moreover, according to the present invention, the core of the microcapsule can contain a fire-extinguishing liquid selected from the group comprising: fire-extinguishing liquids having boiling points in the 45 °C -100 °C range. Moreover, according to the present invention, said fire-extinguishing liquid can be selected from the group comprising fluoro-, bromo-, and bromofluoro- hydrocarbons. Moreover, according to the present invention, it is prudent to select said fire-extinguishing liquid from the group comprising perfluoroethyl perfluoroisopropyl ketone and dibromomethane.

Moreover, according to the present invention, it is advisable that the stabilizer in the core of the microcapsule was pyrogenic silicon dioxide modified with methylsilane, with the 300-380 m²/g, specific surface area, for example, in the amount of 1-5 wt.% from the target liquid weight.

Additionally, according to the present invention, the core of the microcapsule can contain perfluoroethyl perfluoroisopropyl ketone as the target fire-extinguishing liquid and hexafluoropropylene oxide dimer as the stabilizer, for example, in the amount of 1-3 wt.% from the weight of perfluoroethyl perfluoroisopropyl ketone.

Additionally, according to the invention, the core of the microcapsule can contain perfluoroethyl perfluoroisopropyl ketone as the target fire-extinguishing liquid and a combination of pyrogenic silicon dioxide modified with methylsilane and hexafluoropropylene oxide dimer, for example, pyrogenic silicon dioxide modified with methylsilane in the amount of 1-5% from the weight of perfluoroethyl perfluoroisopropyl ketone and hexafluoropropylene oxide dimer in the amount of 1-3% of the weight of perfluoroethyl perfluoroisopropyl ketone, respectively.

Moreover, according to the present invention, the microcapsule can have the outer diameter in the 50-400 mcm range.

Moreover, according to the present invention, the microcapsule can contain a fire-extinguishing liquid in the amount of 75-95% of the weight of the microcapsule.

The set objective was additionally achieved by developing a method for the preparation of a microcapsule containing a core, comprising the target lyophilic low-boiling liquid immiscible with water with the characteristic ability to hydrolyze and yield acid products and a stabilizing component suppressing the creation of the acidic environment in the area of shell formation, said core located in a spherical shell made from a cured cross-linked polymeric material, said shell promoting the release of said target liquid under certain external impact conditions that cause a breakup of said shell, wherein:
a) a mixture of the stabilizer and the target liquid was prepared by mixing thereof;
b) an aqueous solution of the initial material of the polymer shell was prepared;
c) the mixture obtained in step a) was emulsified in the aqueous solution of the polymer shell obtained in step b), producing emulsion drops to be placed into the shells;
d) a liquid shell was formed on the emulsion drops obtained in step c) by coacervation, including distillation, sorption of the coacervate drops on the surface of the emulsion drops, and coalescence thereof to produce liquid shells on the emulsion drops;
e) the shell was cured to form microcapsules, said microcapsules were washed with water, filtered, and dried.

Moreover, according to the invention, the method can be adapted to obtain microcapsules, which can explosively destruct in the 90-230 °C temperature range.

Moreover, according to the invention, the method can be adapted to obtain microcapsules with shells prepared from cross-linked gelatin, wherein:
- in step b), the initial material of the polymer shell is gelatin;
- in step d), an aqueous solution of sodium polyphosphate is added to the emulsion of the target liquid in the solution of gelatin obtained in step c) in order to lower the pH of the medium to 4.0-4.5, and after a liquid shell has been formed on the drops of the target liquid emulsion, the reaction mixture is cooled to 5-10 °C;
- in step e), the shells are cured by adding glutardialdehyde to the obtained emulsion, kept at said temperature for at least 1.0 hour, followed by increasing the temperature to 20-25 °C, lowering the pH of the mixture to 1.0-2.0, adding resorcinol and formaldehyde, and keeping it at 30-35 °C for at least 1 hour.

Moreover, according to the present invention, the dispersion of pyrogenic silicon dioxide in the target liquid obtained in step a) can be optionally pretreated with ultrasound at 20-35 kHz for up to 0.5 hr., until the reaction mass clears while maintaining a slight opalescence. Such treatment yields a stable dispersion of said silicon dioxide in the target liquid having particle size of no less than 1 mcm, which ensures the formation of its functional surface.

Moreover, according to the invention, the method can be adapted to obtain a microcapsule with the core comprising a fire-extinguishing liquid, and in step a) the target fire-extinguishing liquid is selected from the group comprising fire-extinguishing liquids with boiling points in the 45-100 °C range. Moreover, according to the invention, the target liquid can be any fire-extinguishing liquid selected from the group containing fluoro-, bromo-, and bromofluoro- hydrocarbons. Moreover, according to the invention, the fire-extinguishing liquid can be any fire-extinguishing liquid selected from the group containing perfluoroethyl perfluoroisopropyl ketone, dibromomethane, and tetrafluorodibromoethane.

Moreover, according to the present invention, in said method in step a) pyrogenic silicon dioxide, which has been modified with methylsilane, with the specific surface area of 300-380 m²/g, for example, in the amount of 1-5 wt.% from the target liquid weight, can be used as the stabilizer.

Moreover, according to the present invention, the method can be adapted to obtain microcapsules with cores containing perfluoroethyl perfluoroisopropyl ketone, wherein in step a) the target fire-extinguishing liquid can be liquid perfluoroethyl perfluoroisopropyl ketone and the stabilizer can be liquid hexafluoropropylene oxide dimer. Moreover, according to the present invention, the hexafluoropropylene oxide dimer can be used in the amount of 1-3 wt.% from the weight of perfluoroethyl perfluoroisopropyl ketone.

Moreover, according to the invention, the method can be adapted to obtain microcapsules with cores containing perfluoroethyl perfluoroisopropyl ketone, wherein in step a) the target fire-extinguishing liquid is liquid perfluoroethyl perfluoroisopropyl ketone and the stabilizer can be a combination of pyrogenic silicon dioxide modified with methylsilane dispersed in the target liquid and liquid hexafluoropropylene oxide dimer. Moreover, according to the present invention, a combination of pyrogenic silicon dioxide modified with methylsilane in the amount of 1-5 wt.% from the weight of perfluoroethyl perfluoroisopropyl ketone and hexafluoropropylene oxide dimer in the amount of 1-3 wt.% from the weight of perfluoroethyl perfluoroisopropyl ketone can be used.

Moreover, according to the present invention, the method can be adapted to obtain microcapsules having outer diameters in the 50-400 mcm range.

Moreover, according to the present invention, the method provides microcapsules with cores containing fire-extinguishing liquids in the amount of 75-95% from the weight of the microcapsules.

The invention also provides a microencapsulated fire-extinguishing agent, which is a powder of microcapsules of the invention described supra.

Moreover, the invention also provides a fire-extinguishing composite material containing a microencapsulated fire-extinguishing agent according to the present invention dispersed in cured resin or cured rubber. Moreover, according to the invention, the fire-extinguishing composite material can be foam, or cured paste, or structural elements, or film, or fire-extinguishing fabrics impregnated or coated with curable paste containing resin or rubber with the microencapsulated fire-extinguishing agent of the invention dispersed therein.

Moreover, the invention also provides a fire-extinguishing article for the preventive protection of objects from fire, equipped with a fire-extinguishing element fixed on the surface of a bearing component and containing a reactive microencapsulated fire-extinguishing agent of the invention set in a polymer matrix; wherein said article has such spatial configuration as to have the largest surface area of said fire-extinguishing element to be arranged in the zone to be protected or adjacent thereto, when placed in the object to be protected.

Moreover, according to the invention, the polymer matrix of the fire-extinguishing element can be made from materials selected from the group comprising: cold-cured silicon rubber, styrene-butadiene rubber, polyvinyl acetate, polyvinyl alcohol, cold-cured rubber-reinforced epoxy resins, polyester resins, alkyd pentaphthalic enamel, and alkyd glyptal enamel.

Moreover, according to the invention, the fire-extinguishing article can be detachable.

Moreover, according to the present invention, the bearing component can be made from materials selected from the group comprising: heat-resistant glass, metals, ceramics, elastic polymers, flexible polymers, magnetic rubber, polymers containing magnetic powder, fiberglass, woven and nonwoven fabrics, and carbon fabrics. Moreover, according to the invention, the fire-extinguishing article can be made as a one-sided adhesive or a double-sided adhesive.

### Brief List of Figures

The invention will be further illustrated with embodiments and the attached figures, which show:

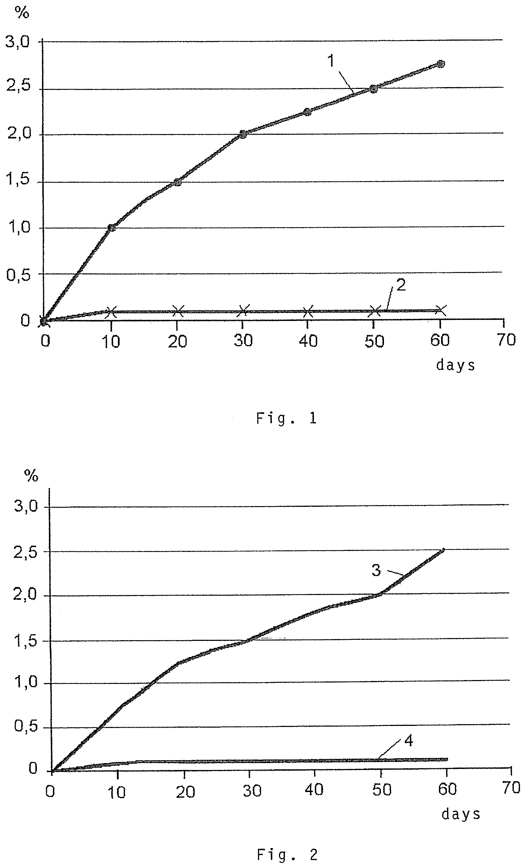

Fig. 1. Loss of the target liquid from the core of microcapsule during open storage (in bulk) of the microencapsulated fire-extinguishing agent of the invention, containing a powder of microcapsules of the invention, with shells made of cross-linked gelatin and cores comprising perfluoroethyl perfluoroisopropyl ketone without a stabilizer (line 1) and perfluoroethyl perfluoroisopropyl ketone with pyrogenic silicon dioxide modified with methylsilane in the amount of 5.0 wt.% as a stabilizer (line 2).
Fig. 2. Loss of the target liquid from the core of microcapsule during open storage (in bulk) of the microencapsulated fire-extinguishing agent of the invention, containing a powder of microcapsules of the invention, with shells made of cross-linked gelatin and cores comprising dibromomethane without a stabilizer (line 3), dibromomethane with pyrogenic silicon dioxide modified with methylsilane in the amount of 1.0 wt.% as a stabilizer (line 4).

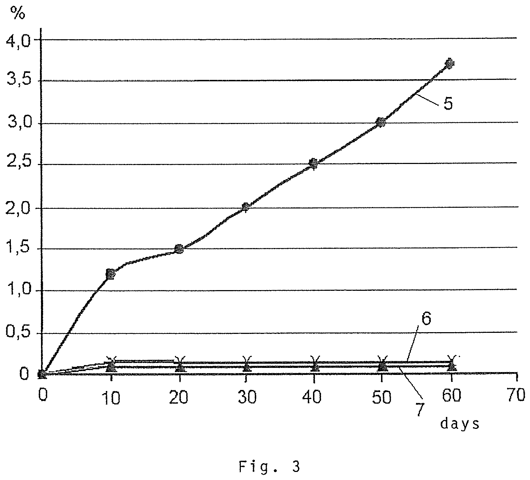

Fig. 3. Loss of the target liquid from the core of the microcapsule during open storage (in bulk) of the microencapsulated fire-extinguishing agent of the invention, containing a powder of microcapsules of the invention with shells made of cross-linked gelatin and cores comprising perfluoroethyl perfluoroisopropyl ketone without a stabilizer (line 5), hexafluoropropylene oxide dimer in the amount of 1.0 wt.% as a stabilizer (line 6), or perfluoroethyl perfluoroisopropyl ketone with hexafluoropropylene oxide dimer in the amount of 3.0 wt.% as a stabilizer (line 7).

The present invention is not limited in scope by the examples described herein; said example are not exhaustive and do not limit the possible embodiments of the invention, which fall within the scope of the appended claims.

### Preferred Embodiment

According to the results of the studies conducted by the inventors, behavior of various lyophilic liquids intended for microencapsulation and exhibiting characteristic abilities to retain water upon their contact therewith, depends on their properties, such as the maximum possible water content in perfluoroketone (about 0.1 wt.%), while dibromomethane can contain 1.2 wt. % of water. As a comparison, the lyophilic low-boiling water-immiscible fire-extinguishing liquid tetrafluorodibromoethane, which is used herein as a reference, effectively doesn't absorb any water (water content 0.003 wt.%) and doesn't react with water, which is evidenced by the long-term stability of the microcapsule prepared by the method known in the art (RU, 2469761, C1), with the core made of tetrafluorodibromomethane inside the shell made from cross-linked gelatin comprising nanoparticles of a mineral filler.

A study of processes taking place in the reaction mixture during the emulsification and coacervation stages of known methods for the preparation of microcapsules using various lyophilic water-immiscible liquids, which the inventors conducted with liquid perfluoroketone, dibromomethane, and tetrafluorodibromoethane as fire-extinguishing liquids, and in particular, while studying coacervation drops under a microscope during microencapsulation of tetrafluorodibromoethane, the inventors clearly observed a deformation of coacervation drops with the creation of "noses" before said drops merged with one another around the target liquid creating an intact liquid shell. During microencapsulation of dibromomethane, and especially of perfluoroketone, the coacervation drops did not become deformed in the reaction mixture, but retained their round shape and formed a "bead necklace" on the surface of the liquid to be encapsulated, which when cured, yielded a shell filled with micropores.

The inventors hypothesized that lyophilic low-boiling water-immiscible liquids with characteristic affinity to hydrolysis that yields acid products can be stabilized by adding to the liquid to be encapsulated a stabilizer inhibiting acidification of the emulsion drops and thus, inhibiting the acidic effect on the condition of the polymer in the coacervation drop at the interphase boundary after it reaches the surface of the target liquid emulsion drop.

The studies conducted on the methods for the preparation of microcapsules using various possible stabilizers showed that the best results could be obtained when pyrogenic silicon dioxide treated with water-repellent methylsilane, or hexafluoropropylene oxide dimer, or the mixture thereof were used as stabilizers.

Said pyrogenic silicon dioxide in the drops of the target liquid was shown to retain a small amount of exposed active centers, which were sufficient for absorbing small amounts of water incoming into the drops of liquid at the emulsification and coacervation stages of the formation of shells around the capsules in aqueous reaction media and retained by the lyophilic liquid.

The mechanism of the observed stabilization reaction of perfluoroketones in the presence of hexafluoropropylene oxide dimer has not yet been properly studied. The oxide possibly binds the trace amounts of water and causes cleavage along the -C-O-C- bond.

Thus, addition of pyrogenic silicon dioxide modified with methylsilane with the specific surface area of 300-380 m²/g' or hexafluoropropylene oxide dimer, or a mixture thereof to the target liquid can efficiently inhibit the formation of acid products of hydrolysis of said lyophilic liquids in the formed drops and prevent the uncontrolled influx of the formed acid products into the zone wherein the shells are formed from the coacervates. This, in turn, will contribute to the formation of unbroken liquid shells, inhibit the formation of pores in the cured shell, and, hence, improve the stability of microcapsules during prolonged storage and use.

Preparation of the microcapsule of the present invention containing a core, comprising a target lyophilic low-boiling liquid immiscible with water with characteristic affinity to hydrolysis, which produces acid products, and a stabilizer suppressing the creation of an acidic environment, said microcapsule located in a spherical shell made from a cured cross-linked polymeric material, which promotes the release of said target liquid under certain external impact conditions that cause breakup of said shell, was conducted according to the invention, wherein:
a) a mixture of the stabilizer and the target liquid was prepared by mixing thereof;
b) an aqueous solution of the initial material of the polymer shell was prepared;
c) the mixture obtained in step a) in the aqueous solution of the polymer shell obtained in step b) was emulsified, producing emulsion drops to be placed into the shell;
d) a liquid shell was formed by coacervation on the emulsion drops obtained in step c), including distillation, sorption of the coacervate drops onto the surface of the emulsion drops, and coalescence thereof to produce liquid shells on the emulsion drops;
e) said shell was cured to form a microcapsule, said microcapsule was washed with water, filtered, and dried.

Additionally, according to the present invention, the method can be adapted to obtain microcapsules, which can explosively destruct in the 90-230 °C temperature range and have shells prepared from cross-linked gelatin, wherein in the method of the invention:
- in step b), the initial material of the polymer shell was gelatin;
- in step d), an aqueous solution of sodium polyphosphate was added to the emulsion of the target liquid in the solution of gelatin obtained in step c) in order to lower the pH of the medium to 4.0-4.5, and subsequently, upon formation of liquid shells on the drops of the target liquid emulsion, the reaction mixture was cooled to 5-10 °C;
- in step e), the shells were cured by adding glutardialdehyde to the obtained emulsion, keeping it at said temperature for at least one hour, followed by increasing the temperature to 20-25 °C, lowering the pH of the mixture to 1.0-2.0, adding resorcinol and formaldehyde, and keeping it at 30-35 °C for at least one hour.

Furthermore, according to the present invention, the silicon dioxide suspension obtained in step a) was additionally treated with ultrasound at 20-35 kHz for 0.5 hr., until the reaction mass cleared while retaining a slight opalescence.

Moreover, in order to facilitate the breakup of the shells and evaporation of the core when heat and fire are applied, the target lyophilic low-boiling water-immiscible liquids with characteristic affinity to hydrolysis that produces acid products were selected as follows: in step a) of the microcapsule-producing method of the invention, the selected fire-extinguishing liquids had boiling points in the 45-100 °C range and were selected from the group comprising the fluoro-, bromo-, and bromofluoro- hydrocarbons approved for use, and in particular:
- in the fluoro- group: liquid perfluoroethyl perfluoroisopropyl ketone, Novec 1230 (perfluoroketone), (Examples 1, 3, 4);
- in the bromo- group: liquid dibromomethane (Example 2);
- in the bromofluorinated, group: liquid tetrafluorodibromoethane, temporarily approved for use, (Example 5) as a reference in the example of microencapsulation of fire-extinguishing liquids not requiring the proposed stabilization.

Furthermore, in said method, step a) the stabilizer inhibiting the formation of the acidic environment was
- solid powdered pyrogenic silicon dioxide modified with methylsilane, grade AM-1-300, with the specific surface area of 300-380 m²/g, in the amount of 1-5 wt.% as a dispersion in the target liquid (Examples 1 ,2, 5);
- hexafluoropropylene oxide dimer in the amount of 1-3 wt.% in the target liquid (example 2);
- a mixture of pyrogenic silicon dioxide modified with methylsilane with the specific surface area of 300-380 m²/g, in the amount of 1-5 wt.% from the weight of the target liquid weight and hexafluoropropylene oxide dimer in the amount of 1-3 wt.% from the weight of the target liquid (Example 4).

The microcapsules with shells prepared from cross-linked gelatin, said shells comprising cores containing various target fire-extinguishing liquids with no added stabilizers (Examples 1, 2, 3) and microcapsules with shells prepared from cross-linked gelatin, said shells comprising cores containing various target fire-extinguishing liquids with said stabilizers of the invention added to the reaction mixture (Examples 1, 2, 3, 4, 5) were prepared by the method for the preparation of microcapsules for comparative studies.

### Example 1. Preparation of microcapsules with shells of cross-linked gelatin comprising perfluoroketone cores with no stabilizers added (Variant 1.1) and with pyrogenic silicon dioxide modified with methylsilane added as a stabilizer (Variants 1.2, 1.3).

### Variant 1.1

The microcapsules with no stabilizer added, which serve as the control for the study of the liquid lost from the core of microcapsules, were prepared by a method known in the art.

2.0 g of gelatin were added to 32 ml of distilled water and kept at room temperature for 20 min. and were allowed to swell, then heated to 50 °C for 30 min.

The resulting aqueous gelatin solution was then mixed with 14 ml of perfluoroketone and stirred at 25 °C until an emulsion was formed.

In order to prepare a 5 wt.% aqueous solution, 5.0 g of sodium polyphosphate were added to 95.0 g of distilled water and stirred at 60-70 °C for 1-2 hrs.

In order to prepare a 15 wt.% aqueous solution of resorcinol, 15.0 g of resorcinol were added to 85.0 g of distilled water and stirred at room temperature for 30 min.

To conduct the coacervation and sorption of coacervate drops on the drops of the emulsion, said emulsion was combined with 4.8 g of said 5 wt.% sodium polyphosphate and 0.5 ml of 10 wt.% sulfuric acid, until the pH of the reaction mixture reached 4.2-4.3. After the temperature was gradually lowered to 10 °C over a period of one to two hours, a liquid shell was formed.

To cure the shell, 2 ml of 25 wt.% aqueous solution of glutaric aldehyde were added to the reaction mixture, held at said temperature for at least 1.0 hr., the temperature was then increased to 20-25 °C, the pH was lowered to 1.0-2.0 by adding sulfuric acid (10 wt.% concentration), 5.2 ml of said 15 wt.% aqueous resorcinol solution, and 8.0 ml of 37 wt.% aqueous formaldehyde solution, and the reaction mixture was held at 30-35 °C for at least one hour.

The obtained microcapsules were washed with water by decantation, isolated by filtration, and dried.

The prepared microcapsules were 50-400 mcm in diameter; the perfluoroketone content was 89% from the weight of the microcapsules; the yield of the microcapsules was 92%; the explosive breakup temperature was 90 °C. The explosive breakup temperature was considered to be the temperature, at which a sharp bend on the weight loss curve was observed in gravimetric analysis (TGA) of the microcapsules.

### Variant 1.2

The microcapsule containing a stabilizer was prepared by the method of the present invention, wherein:
- step a): a dispersion of perfluoroketone and the stabilizer, pyrogenic silicon dioxide modified with methylsilane with the specific surface area of 300-380 m²/g, in the amount of 1.0 wt.% from the weight of perfluoroketone, was prepared by mixing both components and treating the resulting dispersion with ultrasound according to the invention for 20-30 min. until clearing;
- step b): an aqueous solution of the initial material of the polymer shell, gelatin, was prepared by the method similar to that described in Variant 1.1;
- step c): the dispersion of perfluoroketone and said pyrogenic silicon dioxide prepared in step a) was emulsified in the aqueous solution of the initial material of the polymer shell, gelatin, obtained in step b), to yield emulsion drops to be placed in the shell;
- step d) liquid shells were formed by coacervation on the emulsion drops obtained in step c), which included distillation, sorption of the coacervate drops onto the surface of the emulsion drops, and coalescence thereof creating liquid shells on the drops of the emulsion;
- step e) the shells were cured to yield microcapsules, which were washed with water, filtered, and dried.

Wherein, to cure the shells, the reaction mass was cooled to +8 - +10 °C and combined with 2 ml of 25 wt.% aqueous solution of glutaric aldehyde, held at said temperature for at least one hour, after which the temperature was raised to 20-25 °C, the pH was lowered to 1.0-2.0 by adding 10 wt.% sulfuric acid, 5.2 ml of said 15 wt.% aqueous resorcinol solution, and 8.0 ml of aqueous 37 wt.% formaldehyde solution, and the reaction mixture was kept at 30-35 °C for one hour.

The obtained microcapsules were washed with water by decantation, isolated by filtration, and dried.

The prepared microcapsules were 50-400 mcm in diameter, the perfluoroketone content was 89% from the weight of the microcapsule, the yield of the microcapsules was 92%, the explosive breakup temperature of the microcapsules was 90 °C.

### Variant 1.3

The microcapsule with an added stabilizer was prepared by the method described un Variant 1.2, wherein the content of the stabilizer, pyrogenic silicon dioxide modified with methylsilane with the specific surface area of 300-380 m²/g was 5.0 wt.% from the weight of perfluoroketone.

The prepared microcapsules were 50-400 mcm in diameter, the perfluoroketone content was 92% from the weight of the microcapsule, the yield of the microcapsules was 93%, the explosive breakup temperature of the microcapsules was 90 °C.

### Example 2. Preparation of microcapsules with shells of cross-linked gelatin, comprising dibromomethane cores with no stabilizers added (Variant 2.1) and with pyrogenic silicon dioxide modified with methylsilane added as a stabilizer (Variants 2.2, 2.3).

### Variant 2.1

The microcapsules with no stabilizers added were prepared by the method similar to that described in Variant 1.1. Example 1, with no stabilizer added but using dibromomethane as the target liquid and curing the shells of the microcapsules as follows: upon addition of the glutaric aldehyde solution to the reaction mixture at +8 - +10 °C and keeping it for one hour, 5.2 ml of 15 wt.% aqueous resorcinol was added and the mixture was stirred for 15 min.; 10 wt.% sulfuric acid was then added to bring the pH down to 1.3-1.4, 8.0 ml of 37 wt.% aqueous solution of formaldehyde were added, and the mixture was kept at 30-35 °C for 1.5 hr.

The prepared microcapsules were 50-400 mcm in diameter, the perfluoroketone content was 93% from the weight of the microcapsule, the yield of the microcapsules was 90%, and the explosive breakup temperature of the microcapsules was 220 °C.

### Variants 2.2 and 2.3

The microcapsules containing stabilizers were prepared by the method of the present invention, wherein:
- step a): a dispersion of the stabilizer, pyrogenic silicon dioxide modified with methylsilane with the specific surface area of 300-380 m²/g in dibromomethane in the amount of 1.0 wt.% (Variant 2.2) and 5.0 wt.% (Variant 2.3.) from the weight of dibromomethane was prepared by mixing both components and treating the resulting dispersion with ultrasound for 20-25 min. until clearing;
- step b): an aqueous solution of the initial material of the polymer shell, gelatin, was prepared by the method similar to that described in Variant 1.1, Example 1;
- step c): the dispersion of dibromomethane and said pyrogenic silicon dioxide prepared in step a) was emulsified in the aqueous solution of gelatin obtained in step b), to yield emulsion drops to be placed in the shell;
- step d) liquid shells were formed by coacervation on the emulsion drops obtained in step c), which included distillation , sorption of the coacervate drops onto the surface of the emulsion drops, and coalescence thereof, yielding liquid shells on the drops of the emulsion;
- step e) the shells were cured to yield microcapsules, which were then washed with water, filtered, and dried.

The prepared microcapsules were 50-400 mcm in diameter, the dibromomethane content was 93% from the weight of the microcapsules, the yield of the microcapsules was 90%, and the explosive breakup temperature of the microcapsules was 220 °C.

### Example 3. Preparation of microcapsule with shells of cross-linked gelatin comprising perfluoroketone cores with hexafluoropropylene oxide dimer added as a stabilizer (variants 3.1, 3.2).

### Variants 3.1 and 3.2

The microcapsules with added stabilizers were prepared by the method of the present invention, wherein:
- step a): a mixture of perfluoroketone and the stabilizer, hexafluoropropylene oxide dimer, in the amounts of 1.0 wt.% (Variant 3.1) and 3.0 wt.% (Variant 3.2.) from the weight of perfluoroketone was prepared by mixing both components;
- step b): an aqueous solution of the initial material of the polymer shell, gelatin, was prepared by the method similar to that described in Variant 1.1, Example 1;
- step c): the mixture prepared in step a) was emulsified in the aqueous solution of gelatin, the polymer material of the shell, obtained in step b), to yield emulsion drops to be placed in the shell;
- step d) a liquid shell was formed by coacervation on the emulsion drops obtained in step c), which included distillation, sorption of the coacervate drops onto the surface of the emulsion drops, and coalescence thereof, yielding liquid shells on the drops of the emulsion;
- step e) the shells were cured to yield microcapsules, which were then washed with water, filtered, and dried in a manner similar to that in Variant 1.2, Example 1.

The prepared microcapsules were 50-400 mcm in diameter, the perfluoroketone content was 95% from the weight of the microcapsules, the yield of the microcapsules was 89%, and the explosive breakup temperature of the microcapsules was 90-92 °C.

### Example 4. Preparation of microcapsules with shells of cross-linked gelatin comprising perfluoroketone cores with a combination of pyrogenic silicon dioxide modified with methylsilane and hexafluoropropylene oxide dimer used as stabilizers (Variants 4.1,4.2).

### Variants 4.1 and 4.2

The microcapsules with stabilizers added were prepared by the method of the present invention, wherein:
- step a): a mixture of perfluoroketone and two stabilizers, pyrogenic silicon dioxide modified with methylsilane with the specific surface area of 300-380 m²/g and hexafluoropropylene oxide dimer, in the amounts of 5.0 wt.% and 1.0 wt.% from the weight of perfluoroketone, respectively (Variant 4.1.), or in the amounts of 1.0 wt.% and 3.0 wt.% from the weight of perfluoroketone, respectively, (Variant 4.2.) was prepared by mixing the components after a preliminary ultrasound treatment of the dispersion of silicon dioxide in dibromomethane in a manner similar to that described in Example 2.
- step b): an aqueous solution of the initial material of the polymer shell, gelatin, was prepared by the method similar to that described in Variant 1.1, Example 1;
- step c): the mixture prepared in step a) was emulsified in the aqueous solution of gelatin, the polymeric material of the shell, obtained in step b), to yield emulsion drops to be placed in the shell;
- step d) liquid shells were formed by coacervation on the emulsion drops obtained in step c), which included distillation, sorption of the coacervate drops onto the surface of the emulsion drops, and coalescence thereof, yielding liquid shells on the drops of the emulsion;
- step e) the shells were cured to yield microcapsules, which were then washed with water, filtered, and dried in a manner similar to that in Variant 1.2, Example 1.

The prepared microcapsules were 50-400 mcm in diameter, the perfluoroketone content was 93% from the weight of the microcapsules, the yield of the microcapsules was 89%, and the explosive breakup temperature of the microcapsules was 90-92 °C.

### Example 5. Preparation of microcapsules with shells of cross-linked gelatin comprising tetrafluorodibromoethane cores without a stabilizer (Variant 5.1) and with pyrogenic silicon dioxide modified with methylsilane as a stabilizer (Variant 5.2).

### Variants 5.1

The microcapsules without a stabilizer were prepared by the method similar to that described in Variant 1.1 Example 1, but using tetrafluorodibromoethane as the target liquid.

The prepared microcapsules were 50-400 mcm in diameter, the tetrafluorodibromoethane content was 92% from the weight of the microcapsules and the explosive breakup temperature of the microcapsules was 130 °C.

### Variants 5.2

The microcapsules with a stabilizer were prepared by the method of the present invention, wherein:
- step a): a mixture of tetrafluorodibromoethane and the stabilizer, liquid pyrogenic silicon dioxide modified with methylsilane with the specific surface area of 300-380 m²/g in the amount of 5.0 wt.% from the weight of tetrafluorodibromoethane was prepared by mixing both components and treating the resulting mixture with ultrasound for 25 min. until clearing;
- step b): an aqueous solution of the initial material of the polymer shell, gelatin, was prepared by the method similar to that described in Variant 1.1, Example 1;
- step c): the dispersion of tetrafluorodibromoethane and said pyrogenic silicon dioxide prepared in step a) was emulsified in the aqueous solution of gelatin, obtained in step b), to yield emulsion drops to be placed in the shell;
- step d) liquid shells were formed by coacervation on the emulsion drops obtained in step c), which included distillation , sorption of the coacervate drops onto the surface of the emulsion drops, and coalescence thereof, yielding liquid shells on the drops of the emulsion;
- step e) the shells were cured to yield microcapsules, which were then washed with water, filtered, and dried in a manner similar to that in Variant 1.2, Example 1.

The prepared microcapsules were 50-400 mcm in diameter, the tetrafluorodibromoethane content was 92% from the weight of the microcapsules, and the explosive breakup temperature of the microcapsules was 130 °C.

Thus, this example of the method according to the present invention for the preparation of the microcapsule of the invention, wherein said microcapsule has a core comprising tetrafluorodibromoethane and exhibiting adequate long-term stability when no stabilizer is added, shows that introducing a stabilizer into the core of the microcapsule doesn't affect the preparation process and the properties of the obtained microcapsule.

### Example 6. Study of stability of the microcapsule of the invention during open storage.

The study was conducted in the conditions of open storage of the microencapsulated fire-extinguishing agents of the invention in the form of a powder of the microcapsules of the invention, which were prepared by the method of the present invention as described in Examples 1-3.

Said powder was spread in balk in a thin layer, 1-2 mm thick, on a flat substrate, indoors, at 25 °C.

Fig. 1, 2 and 3 show the loss of perfluoroketone and dibromomethane from the microencapsulated fire-extinguishing agents of the invention comprising a powder of microcapsules of the invention, said microcapsules having shells of cross-linking gelatin and cores, said cores comprising:
- perfluoroketone with no stabilizer (Fig. 1, line 1) (microcapsules were prepared as described in Variant 1.1, Example 1);
- perfluoroketone with a stabilizer, which is pyrogenic silicon dioxide modified with methylsilane, in the amount of 5.0 wt.% (Fig. 1, line 2) (microcapsules were prepared as described in Variant 1.3, Example 1);
- dibromomethane with no stabilizer (Fig. 2, line 3) (microcapsules were prepared as described in Variant 2.1, Example 2);
- dibromomethane with a stabilizer, which is pyrogenic silicon dioxide modified with methylsilane, in the amount of 1.0 wt.% (Fig. 2, line 4) (microcapsules were prepared as described in Variant 2.2, Example 2);
- perfluoroketone with no stabilizer (Fig. 3, line 5) (microcapsules were prepared as described in Variant 1.1, Example 1);
- perfluoroketone with a stabilizer, which is hexafluoropropylene oxide dimer, in the amount of 1.0 wt.% (Fig. 3, line 6) (microcapsules were prepared as described in Variant 3.1, Example 3);
- perfluoroketone with a stabilizer, which is hexafluoropropylene oxide dimer, in the amount of 3.0 wt.% (Fig. 3, line 7) (microcapsules were prepared as described in Variant 3.2, Example 3);

The data shown in Fig. 1, 2, and 3 demonstrate that after 60 days, the loss of liquids from the core that had no stabilizer added was 2.5-3.7 wt.% of the amount of the liquids in microcapsules. Such relatively small losses attributed to the required technical operation conditions for the period of 2 to 5 years, already pose a serious risk of compromising the required fire-extinguishing capabilities during application of these microcapsules and materials.

Said data also show that the loss of liquids from the microcapsules of the invention containing perfluoroketone and pyrogenic silicon dioxide modified with methylsilane (Fig. 1, line 2) or hexafluoropropylene oxide dimer (Fig. 3, lines 6,7) as stabilizers in their cores, as well as the loss of liquids from the microcapsules of the invention, containing dibromomethane with pyrogenic silicon dioxide modified with methylsilane as a stabilizer (Fig. 2, line 4), under experimental conditions was very insignificant in the first 1-10 days of storage (less than 0.1-0.2%); and after 60 days of storage, it was completely absent, which leads to the conclusion that said microcapsules were very stable and hence, so were the fire-extinguishing agents of the invention.

Those skilled in the art of microencapsulation will recognize that the microcapsule of the invention having a core comprising perfluoroketone and a stabilizer, which is a dispersion of pyrogenic silicon dioxide modified with methylsilane and hexafluoropropylene oxide dimer prepared as described in Example 4, will also exhibit high stability.

Thus, the data reported above in Examples 1-6 demonstrate that the method of the invention for the preparation of microcapsules of the invention and implemented as shown in Examples 1-5 provides microcapsules with outer diameters of 50-400 mem, cores containing the target lyophilic low-boiling water-immiscible liquid characterized by its affinity to hydrolysis yielding acid products, which was demonstrated on perfluoroketone and dibromomethane as examples, wherein said cores are enclosed within spherical shells made from a cross-linked polymeric material, which was demonstrated using cross-linked gelatin as an example, which under certain external impact conditions that cause a breakup of said shells, triggers a release of said target liquid, which was demonstrated in the example of the explosive breakup of the obtained microcapsules when heated in the 90-230 °C temperature range, wherein said microcapsules contain the target liquid in the amount of 75-95% from the weight of the microcapsules and additionally, their cores contain stabilizers inhibiting the formation of the acidic environment that leads to the loss of the target liquid from the microcapsules during long storage and use.

Moreover, introducing a stabilizer into the reaction mixture, as was demonstrated on the examples of pyrogenic silicon dioxide modified with methylsilane, with the specific surface area of 300-380 m²/g approved for use and suitable for the application with any target lyophilic low-boiling water-immiscible liquids, including those used in the preparation of food products and fire-extinguishing liquids approved for use, can efficiently prevent the formation of acid products of the hydrolysis of lyophilic liquids during the formation of the shell in the formed drop, and additionally, if the acid products do form in the drop, it prevents an uncontrolled influx of the formed acid products into the shell-forming zone. That, in turn, leads to the creation of an intact liquid shell, impedes the formation of pores in the cured shell, and respectively, contributes to the stability of the microcapsules during prolonged storage and use.

Introducing hexafluoropropylene oxide dimer or a mixture of pyrogenic silicon dioxide modified with methylsilane and hexafluoropropylene oxide dimer into the reaction mixture containing perfluoroketone as the target lyophilic low-boiling water-immiscible liquid also efficiently prevents the formation of acid products of the perfluoroketone hydrolysis in the formed drop, and additionally, if the acid products do form in the drop, it prevents an uncontrolled influx of formed acid products into the shell-forming zone promoting the creation of intact liquid shells, impeding the formation of pores in the cured shells, and hence, improving the stability of the microcapsules during their prolonged storage and use.

### Example 7. Study of the effect of the stabilizer on the efficacy of the microencapsulated fire-extinguishing agent of the invention.

The study was conducted in the laboratory in experimental boxes (200 mm x 200 mm x 200 mm) topped with lids having openings, through which the fuel (10.0 g) contained in a flat Petri dish on the bottom of the box can be ignited, and through which the microencapsulated agent in the form of a powder of microcapsules, prepared as described in Examples 1-3 but with the same quantitative content of various stabilizers in the fire-extinguishing liquid in the core of the microcapsules, can be introduced into the box.

After igniting the diesel fuel, the microencapsulated powdered fire-extinguishing agent was gradually introduced into the box with a hand spray gun through an opening in the cover until the fire has been extinguished. The quantity of the microencapsulated fire-extinguishing agent used to extinguish the fire and the time required to extinguish the fire were hence determined.

The temperature of the flame triggered an explosive breakup of microcapsules and extinguishing of the fire. The obtained results are shown in the Table.

**Table**

| Results of Fire Testing of the Microencapsulated Fire-Extinguishing Agents of the Invention | | | | | |
|---|---|---|---|---|---|
| Groups of Samples | Fire-Extinguishing Liquid | Stabilizer | | Amount of Agent Used g | Time to Extinguish Fire sec. |
| | | 1- pyrogenic silicon dioxide modified with methylsilane; 2- hexafluoropropylene oxide dimer | Amount | | |
| 1 | perfluoroketone | - | - | 3.0 | 3.0 |
| 2 | | 1 | 5% | 2.8 | 3.0 |
| 3 | | 2 | 5% | 3.0 | 3.0 |
| 4 | | - | - | 2.6 | 4.0 |
| 5 | | 1 | 5% | 2.5 | 4.0 |
| 6 | | 2 | 5% | 2.7 | 5.0 |
| 7 | dibromomethane | - | - | 3.4 | 6.0 |
| 8 | | 1 | 5% | 3.5 | 7.0 |
| 9 | | 1 | 5% | 3.8 | 7.0 |
| 10 | | 1 | 5% | 4.0 | 7.0 |

As evident from the Table, the amount of the used microencapsulated fire-extinguishing agent comprising microcapsules with perfluoroketone cores was smaller and the time to extinguish the fire was shorter than those when using the microcapsules containing dibromomethane. That was attributed to the lower thermal breakup temperature of the microcapsules containing perfluoroketone (90-100 °C) as compared to the thermal breakup temperature of the microcapsules containing dibromomethane (220-230 °C) and to the faster impact of the microcapsules with perfluoroketone on the fire. Incidentally, there was no impact noticed of the stabilizers on the thermal breakup temperature and on the fire-extinguishing process.

In addition, the two microencapsulated fire-extinguishing agents, both with perfluoroketone and dibromomethane, were effective. When the shell of the microcapsule breaks under heat or flame, the agent expels the evaporable fire-extinguishing liquid as a gas into the environment where said microcapsules break into "heavy" free radicals, which disrupt the kinetic chains of the fire and thus, put out the fire. In addition, heavy gases block the access of oxygen to the fire source and the heat is spent on evaporation.

Since depending on the fire-extinguishing liquid contained in the microcapsules, the thermal break temperature of microcapsules can vary by more than 100 °C, such microencapsulated fire-extinguishing agents can be used in various fire-extinguishing systems.

Because it is in the form of a powder, the microencapsulated fire-extinguishing agent can be used as a filler in manufacturing fire-extinguishing construction materials containing microencapsulated fire-extinguishing agents of the invention dispersed in cured resin or cured rubber, wherein said materials acquire the fire-extinguishing ability owing to the explosive breakup capacity of the microcapsules contained within said material when the temperature rises to a certain degree of the breakup temperature. In addition, according to the invention, the fire-extinguishing composite material can be made in the form of foam, or curable paste, or as a constructive element, or film, or a fire-extinguishing fabric impregnated or coated with curable paste containing resin or rubber with the microencapsulated fire-extinguishing agent of the invention dispersed therein.

In addition, the invention also provides a fire-extinguishing article for the preventive protection of objects from fire, equipped with a fire-extinguishing element fixed on the surface of a bearing component and containing the reactive microencapsulated fire-extinguishing agent of the invention set in a polymer matrix; wherein said article has such spatial configuration that when said article is arranged in the object to be protected, the largest surface area of the fire-extinguishing element is situated in the zone to be protected or adjacent thereto.

The fire-extinguishing article according to the present invention can be placed in the zones most likely to catch fire: in electrical facilities, cable lines, power bays of different means of transport, as well as in homes as covers for putting out fires.

In addition, according to the present invention, the polymer matrix of the fire-extinguishing element in the fire-extinguishing article can be made from materials selected from the group comprising: cold-cured silicon rubber, styrene-butadiene rubber, polyvinyl acetate, polyvinyl alcohol, cold-cured rubber-reinforced epoxy resins, polyester resins, alkyd pentaphthalic enamel, and alkyd glyptal enamel.

In addition, according to the present invention, the fire-extinguishing article can be detachable.

In addition, according to the present invention, the bearing component can be made from materials selected from the group comprising: heat-resistant glass, metals, ceramics, elastic polymers, flexible polymers, magnetic rubber, polymers containing magnetic powders, fiberglass, woven and nonwoven fabrics, and carbon fabrics. In addition, according to the present invention, the fire-extinguishing product can be made as one-sided adhesive or double-sided adhesive, for example, as a film or a plate.

Examples below illustrate the preparation of various fire-extinguishing materials of the invention, which were made using microencapsulated fire-extinguishing agents of the invention containing microcapsules of the invention.

### Example 8. Preparation of fire-extinguishing construction materials and fire-extinguishing articles according to the invention.

The fire-extinguishing construction materials of the invention were prepared by the technology common for the preparation of all types of fire-extinguishing construction materials including:
1) Preparing a batch of a polymer matrix material: liquid rubber or liquid resin and a curing compound and/or catalyst, and mixing thereof;
2) Preparing a batch of film-forming polymers: solutions, or emulsions, or resins, or rubber, latex, paints, or liquid lacquer solutions as liquids;
3) Preparing a batch of the microencapsulated powdered fire-extinguishing agent of the invention and introducing thereof into the liquid film-forming polymer with stirring (when forming coating, or sheet, or film) or into a liquid binder (when soaking or impregnating the base of the material or curing in a mold);
4) Applying the obtained mixtures (by hand with a brush, with a spatula, by dipping or on a printing press, or with an airbrush) to the surface that creats a material in the required spatial configuration (when preparing molded fire-extinguishing materials), or to the surface to be protected (when preparing fire-extinguishing coatings); or coating or impregnating a substrate (when producing fire-extinguishing fabrics), or by molding for future curing.
5) Polymerization (for liquid resins and rubbers), or drying (for paints, latex, solutions, and emulsions) at moderate temperatures 25-40 °C (molding is achievable if the matrix was formed without a solvent that needs to be removed by drying).

For resins and rubbers, the "matrix : microcapsules" parts by weight ratio was from 40:60 to 30:70, and for paints, lacquer, polymer solutions or emulsions, the "matrix: microcapsules" parts by weight ratio was (85:90) : (15:10) (calculated for the dry residue of the polymer component), and the average of the target liquid content in the microcapsules was about 90 wt.%

Curing and drying were conducted at 25-40 °C

The fire-extinguishing articles of the invention were prepared by the technology common for the preparation of all types of fire-extinguishing articles, including
1) Preparation of a bearing component from materials selected from the group comprising: heat-resistant glass, metals, ceramics, elastic polymers, flexible polymers, magnetic rubber, polymers containing magnetic powder, fiberglass, woven and nonwoven fabrics, and carbon fabrics as plates, film, sheets, or molded articles.
2) Preparation of a fire-extinguishing element by placing the microencapsulated fire-extinguishing agent of the invention, dispersed in a polymer matrix on the bearing component, wherein said matrix is made from a material selected from the group comprising: cold-cured silicon rubber, styrene-butadiene rubber, polyvinyl acetate, polyvinyl alcohol, cold-cured rubber-reinforced epoxy resins, polyester resins, alkyd pentaphthalic enamel, and alkyd glyptal enamel.
3) Polymerization or drying at moderate temperatures 25-40 °C.

Wherein the "matrix : microcapsules" parts by weight ratio was from 40:60 to 10:90, and the average of the target fire-extinguishing liquid content in the microcapsules was about 90 wt.%.

### Variant 8.1 Curable fire-extinguishing paste.

To prepare the paste, 36.4 g of elasticized liquid epoxy resin were mixed with 3.6 g of polyethylene polyamine (curing agent) and 66 g of the microencapsulated powdered fire-extinguishing agent of the invention prepared as described in Variant 1.3, Example 1.

The paste was used prior to curing.

### Variant 8.2 Fire-extinguishing coating.

For fire testing, the fire-extinguishing coating of the invention was prepared as follows: before it was cured, the paste prepared in Variant 8.1 was applied to the inner wall of an experimental box (200 mm x 200 mm x 200 mm) topped with a lid having openings for igniting the fuel (10.0 g) contained in a flat Petri dish on the bottom of the box, and kept at 20-25 °C for 48 hrs. until the coating cured. The obtained coating was up to 1 mm thick.

### Variant 8.3 Fire-extinguishing paint

To prepare the fire-extinguishing paint of the invention, 100 g of water-based paint (based on polyvinyl acetate) or pentaphthalic enamel with a hydrocarbon solvent, with the polymer content of 20 wt.% were combined with 170 g of the microencapsulated fire-extinguishing agent of the invention prepared as described in Variant 3.2, Example 3. For fire testing, the paint was applied to a cardboard sheet 150 x 150 x 200 cm and dried. The thickness of the layer was 0.8-1.0 mm. **Variant 8.4.** Fire-extinguishing screen.

The paste obtained in Variant 8.1 was placed in an aluminum tray 200 mm x 200 mm x 30 mm, with an anti-adhesive coating, and kept at 20-25 °C for 48 hrs. for curing until a plate was formed.

### Variant 8.5. Fire-extinguishing fabric.

The fire-extinguishing fabric was prepared by impregnating fiberglass with an uncured mixture of silicon rubber containing a curing agent (organotin catalyst) and the microencapsulated fire-extinguishing agent of the invention prepared as described in Variant 1.3, Example 1, with further curing.

### Variant 8.6. Fire-extinguishing cover material.

The fire-extinguishing cover material was prepared as follows: 20 g of poly(butyl alkyl acrylate) latex (content of poly(butyl alkyl acrylate) - 40 wt.%) were combined with 8.0 g of the microencapsulated fire-extinguishing agent of the invention comprising microcapsules of the invention prepared as described in Variant 1.2, Example 1. The mass was applied to the box wall for fire testing and dried.

### Variant 8.7. Fire-extinguishing foam.

The fire-extinguishing foam (hard foam) of the invention was prepared as follows: 24 g of polyester Laprol 805, 56 g of polyester Laprol 1002, and 21 g of diethylene glycol were mixed together and combined with vigorous stirring with 0.75 g of DABCO catalyst diluted in 30 ml of 50 wt.% aqueous solution of potassium acetate, 150 g polyisocyanate, and 50 g of the microencapsulated fire-extinguishing agent comprising microcapsules of the invention prepared as described above in Variant 3.2, Example 3.

The foaming mass was placed in an aluminum tray 200 mm x 200 mm x 30 mm with an anti-adhesive coating, and the foam was kept with no heat applied until cured. A 200 x 200 x 30 mm sample of foam was cut out for fire testing.

### Variant 8.8. Detachable fire-extinguishing article for installation on the metal element of the structure of the object to be protected.

A fire-extinguishing article was prepared with a bearing component made of magnetic rubber and carrying a fire-extinguishing element in the form of a fire-extinguishing layer with a polymer matrix comprising the microencapsulated fire-extinguishing agent of the invention prepared as described above (Variant 1.3, Example 1), wherein the uncured silicon-rubber-based layer (as in Variant 8.1.4 for fabric) was applied with a spatula on a sheet of magnetic rubber 0.4 mm thick, and cured at 40 °C. Three 200 x 200 mm plates were cut out to be placed in contact with the lid and the walls of the box in fire testing.

### Variant 8.9. Fire-extinguishing article for installation on the surface of the object to be protected in the area adjacent to the putative fire outbreak zone.

A fire-extinguishing article comprising a bearing component prepared from double-sided adhesive tape, wherein both sides of the tape were coated with an adhesive comprising non-adhesive protective elements, said bearing component comprising a fire-extinguishing element in the form of a fire-extinguishing layer having a polymer matrix comprising the microencapsulated fire-extinguishing agent of the invention prepared as described above (Variant 1.3, Example 1), wherein one side of said tape, cleared from its protective element, was coated with the following uncured composition: 40% solution of styrene-butadiene rubber in the solvent comprising the microencapsulated fire-extinguishing agent of the invention prepared as described above (Variant 1.3, Example 1) in the 66 g of microcapsules per 40 g of rubber ratio. The mixture was dried at 40 °C. For fire testing, the second side of the tape was cleared from its protective element, and the article was fixed to contact the inner walls of the box.

### Example 9. Testing the fire-extinguishing properties of the fire-extinguishing construction materials and fire-extinguishing articles of the invention.

Fire-extinguishing properties were tested by fire in three embodiments:
1) Testing the fire-extinguishing properties with fire-extinguishing materials or articles placed inside a restricted space was conducted in an experimental box (200 mm x 200 mm x 200 mm) covered with a lid with openings for igniting the diesel fuel (30.0 ml) contained in a flat Petri dish on the bottom of the box. For testing, the fire-extinguishing construction materials and fire-extinguishing articles, facing the box with the side comprising the microencapsulated fire-extinguishing agent of the invention, were positioned on the inner wall of said box. The diesel fuel was ignited and the time that took to extinguish the fire was recorded.
   The following fire-extinguishing construction materials of the invention were fire-tested yielding the following results:
   - as a fire-extinguishing coating according to Variant 8.2, applied to the inner side of the box: the fire was extinguished in 12-16 sec.;
   - as a fire-extinguishing screen according to Variant 8.4, on the inner side of the box: the fire was extinguished in 12-15 sec.;
   - as a fire-extinguishing cover material according to Variant 8.6 on the inner side of the box: the fire was extinguished in 3 sec.;
   and for the fire-extinguishing articles according to the invention:
   - as three fire-extinguishing plates according to Variant 8.8 on the lid and side walls inside the box, the fire was extinguished in 12 sec.;
   - as fire-extinguishing tape according to Variant 8.9 on the lid of the box, the fire was extinguished in 14-15 sec.;
2) Testing fire-extinguishing with fire-extinguishing materials placed above the source of fire was conducted in an experimental box (200 mm x 200 mm x 200 mm) covered with a lid and having side openings for igniting the diesel fuel (30.0 ml) contained in a flat Petri dish on the bottom of the box. The diesel fuel was ignited and the time that took to extinguish the fire was recorded.
   Said fire testing was conducted on fire-extinguishing construction materials of the invention in the form of fire-extinguishing fabrics according to Variant 8.5, with which the fuel in the dish was covered. The fire was extinguished in 8-10 sec.;
3) Testing fire extinguishing with fire-extinguishing materials or articles placed in an open space was conducted by open fire when the articles were contacted with the flame from a standard home gas burner. The time that took to extinguish the fire was recorded.

Said fire testing was conducted on fire-extinguishing construction materials of the invention as fire-extinguishing paint according to Variant 8.3, and as fire-extinguishing foam according to Variant 8.7. At the contact with the flame, a crackling noise of the breaking microcapsules could be heard. The fire was extinguished in 3-4 sec. and 2-3 sec., respectively. The foam and the cardboard under the paint didn't catch fire.

In all said fire tests, the temperature of the flame triggered a release of gaseous products from the destructed microcapsules due to the thermal breakdown of the fire-extinguishing liquid, while the fire-extinguishing materials and fire-extinguishing articles retained their initial shape. The surface facing the fuel showed "craters" the size of microcapsules, formed after the microcapsules broke up in the fire-extinguishing surface layer. Incidentally, only an insignificant part of the microcapsules was destroyed, and the surface of the fire-extinguishing layer on the samples was hardly damaged, so the sample could be reused.

Thus, the method of the invention can be used to prepare the microcapsule of the invention containing a core comprising the target lyophilic low-boiling water-immiscible liquid with characteristic affinity to hydrolysis that yields acid products, said microcapsules containing stabilizers preventing hydrolysis of the target liquid in the core and thus, ensuring the stability of the properties of the microcapsules and the liquids contained therein over a long time period. Moreover, in the method of the invention for the preparation of microcapsules, the target liquid is prevented from flowing into the zone wherein the shells of the acidic hydrolysates of the target liquid, which interfere with the formation of intact shells, are formed.

The method for the preparation of microcapsules of the invention doesn't require any special technological stages for the preparation of stabilizers and/or any special modifications of their surfaces, as the required products are commercially available.

The method for the preparation of microcapsules of the invention can be applied in various industrial areas to create microcapsules with different target liquids and long shelf lives.

Those skilled in the art of fire fighting will recognize that the method for the preparation of microcapsules of the invention can be applied to provide microencapsulated fire extinguishing agents capable of expelling target liquid products into the environment at certain temperatures, for example, by selecting certain fire extinguishing liquids and shells; and to ensure long-term stability of the microcapsules by introducing stabilizers into the reaction medium of the invention.

As to the microcapsules comprising fire-extinguishing liquids, the explosive breakup temperature of the microcapsules was provided to be in the 90-230 °C range, depending on the nature of a given fire-extinguishing liquid, because when the environmental temperatures go up, the fire-extinguishing liquid inside the shell overheats to the temperature significantly exceeding the boiling point thereof under normal conditions: for example, for perfluoroketone - in 45-50 °C, for dibromomethane - in 120-130 °C.

The microencapsulated fire-extinguishing agents of the invention comprising a powder of microcapsules of the invention, wherein said microcapsules comprise cores of the target fire-extinguishing liquid containing stabilizers, which prevent hydrolysis of the target fire-extinguishing liquid in the cores, wherein said agents exhibit characteristic stability of the fire-extinguishing properties of fire-extinguishing liquids over a long time period and reliable efficiency of expelling the thermal breakdown products of fire-extinguishing liquids at the temperatures, at which the microcapsules break down, which are in the 90-230 °C range. (wherein the explosive breakup temperature of the microcapsules was considered to be the temperature, at which a sharp bend on the weight loss curve was observed in gravimetric analysis (TGA) of the microcapsules).

Said microencapsulated fire-extinguishing agents can be used in different industries and different fire-fighting systems for the efficient timely automatic prevention of fires both as powders of the microencapsulated fire-extinguishing agents of the invention, and as part of a composition of fire-extinguishing materials or fire-extinguishing articles for the preventive protection of objects from fire, which remain highly effective and maintain their fire-extinguishing ability for a long time period.

### Industrial Applicability

The microcapsules of the invention prepared by the method of the invention can be made from known materials by known manufacturing methods, and thus, can be used in different industries, such as chemical, food, and cosmetic industries. The microencapsulated fire-extinguishing agents, fire-extinguishing, articles and fire-extinguishing materials are free from environmental and health hazards and remain stable for a long time during their storage and use, which makes said objects useful in the creation and application of novel and highly stable fire-extinguishing materials and articles based thereupon, in industrial, private, and public buildings used by the populace.

## Claims

1. A microcapsule comprising a core containing a target lyophilic low-boiling liquid immiscible with water with characteristic affinity to hydrolysis, which produces acid products; wherein said core is positioned in a spherical shell made from a cured cross-linked polymeric material, said shell promotes the release of said target liquid under certain external impact conditions that cause a breakup of said shell, wherein said microcapsule additionally contains a stabilizer.

2. The microcapsule of claim 1, wherein said microcapsule can explosively break up in the 90-230 °C temperature range;

3. The microcapsule of claim 2, wherein said microcapsule has a shell made of cross-linked gelatin;

4. The microcapsule of claim 3, wherein said target liquid in the core is a fire-extinguishing liquid selected from the group comprising fire-extinguishing liquids with boiling points in the 45-100 °C temperature range;

5. The microcapsule of claim 4, wherein the fire-extinguishing liquid in the core is selected from the group comprising fluoro-, bromo-, and bromofluoro- hydrocarbons and ketones;

6. The microcapsule of claim 5, wherein said core in said microcapsule contains a fire-extinguishing liquid selected from the group comprising perfluoroethyl perfluoroisopropyl ketone and dibromomethane;

7. The microcapsule of claims 3 or 4, wherein said stabilizer in the core is pyrogenic silicon dioxide modified with methylsilane, with the specific surface area of 300-380 m²/g.

8. The microcapsule of claim 7, wherein said core in said microcapsule comprises pyrogenic silicon dioxide modified with methylsilane in the amount of 1-5 wt.% from the weight of the target liquid.

9. The microcapsule of claim 6, wherein said target liquid in said core of said microcapsule is perfluoroethyl perfluoroisopropyl ketone and said stabilizer is hexafluoropropylene oxide dimer.

10. The microcapsule of claim 9, wherein said core comprises hexafluoropropylene oxide dimer in the amount of 1-3 wt.% from the weight of perfluoroethyl perfluoroisopropyl ketone.

11. The microcapsule of claim 6, wherein said target fire-extinguishing liquid in said core is perfluoroethyl perfluoroisopropyl ketone and said stabilizer is a combination of pyrogenic silicon dioxide modified with methylsilane and hexafluoropropylene oxide dimer.

12. The microcapsule of claim 9, wherein said core comprises a combination of pyrogenic silicon dioxide modified with methylsilane in the amount of 1-5 wt.% from the weight of perfluoroethyl perfluoroisopropyl ketone and hexafluoropropylene oxide dimer in the amount of 1-3 wt.% from the weight of perfluoroethyl perfluoroisopropyl ketone.

13. The microcapsule of claim 4, wherein said microcapsule has an outer diameter in the 50-400 mcm range.

14. The microcapsule of claim 4, wherein said microcapsule comprises a fire-extinguishing liquid in the amount of 75-95% from the weight of the microcapsule.

15. A method for the preparation of a microcapsule with a core comprising a target lyophilic low-boiling liquid immiscible with water with characteristic affinity to hydrolysis yielding acid products and a stabilizer inhibiting the resulting acidity, wherein said core is placed in a spherical shell made from a cured cross-linked polymeric material, said core ensures a release of said target liquid in response to a certain external impact, which causes a breakup of said shell, wherein:
a) a mixture of the stabilizer and the target liquid is prepared by mixing thereof;
b) an aqueous solution of the initial material of the polymer shell is prepared;
c) the mixture prepared in step a) is emulsified in the aqueous solution of the polymeric material of the shell prepared in step b), yielding emulsion drops, which are to be placed in the shell;
d) a liquid shell is formed by coacervation on the emulsion drops prepared in step c), including distillation, sorption of the coacervate drops on the surface of the emulsion drops, and coalescence thereof to produce liquid shells on the emulsion drops;
e) the shells are cured to produce microcapsules, said microcapsules are washed with water, filtered, and dried.

16. The method of claim 15, wherein said method is adapted to yield microcapsules that can explosively break up in the 90-230 °C temperature range.

17. The method of claim 16, wherein said method is adapted to yield a microcapsule with a shell made of cross-linked gelatin, wherein:
- in step b), the initial material of the polymer shell is gelatin;
- in step d), the emulsion of the target liquid in gelatin obtained in step c) is combined with an aqueous solution of sodium polyphosphate and sulfuric acid (10 wt %) to lower the pH of the medium to 4.0-4.5, and the obtained emulsion is then cooled to 5-10 °C.
- in step e), the shells are cured by adding glutaric aldehyde to the obtained emulsion, keeping said mixture at the desired temperature for at least one hour, followed by raising the temperature to 20-25 °C, lowering the pH of the mixture to 1.0-2.0, adding resorcinol and formaldehyde, and keeping at 30-35 °C for at least 40 min.

18. The method of claim 17, wherein the emulsion obtained in step c) is additionally treated with ultrasound at 20-35 kHz for up to 0.5 hr., until the reaction mass clears while maintaining a slight opalescence.

19. The method of claim 17, wherein said method is adapted to obtain a microcapsule with the core of said microcapsule comprising a target fire-extinguishing liquid, and in step a), the fire-extinguishing liquid is a fire-extinguishing liquid selected from the group comprising fire-extinguishing liquids with boiling points in the 45-100 °C range.

20. The method of claim 19, wherein the target liquid is a fire-extinguishing liquid selected from the group comprising: fluoro-, bromo-, and bromofluoro- hydrocarbons and ketones.

21. The method of claim 20, wherein the target liquid is a fire-extinguishing liquid selected from the group comprising perfluoroethyl perfluoroisopropyl ketone and dibromomethane.

22. The method of claim 17 or 19, wherein in step a), the stabilizer is pyrogenic silicon dioxide modified with methylsilane, with the specific surface area of 300-380 m²/g.

23. The method of claim 22, wherein said pyrogenic silicon dioxide modified with methylsilane is in the amount of 1-5 wt.% from the weight of the target liquid.

24. The method of claim 21, wherein in step a), the target fire-extinguishing liquid is liquid perfluoroethyl perfluoroisopropyl ketone and the stabilizer is liquid hexafluoropropylene oxide dimer.

25. The method of claim 24, wherein the hexafluoropropylene oxide dimer is in the amount of 1-3 wt.% of the weight of perfluoroethyl perfluoroisopropyl ketone.

26. The method of claim 21, wherein in step a), the target fire-extinguishing liquid is liquid perfluoroethyl perfluoroisopropyl ketone and the stabilizer is a combination of liquid pyrogenic silicon dioxide modified with methylsilane and liquid hexafluoropropylene oxide dimer.

27. The method of claim 26, wherein said combination is a combination of pyrogenic silicon dioxide modified with methylsilane in the amount of 1-5 wt.% from the weight of perfluoroethyl perfluoroisopropyl ketone and hexafluoropropylene oxide dimer in the amount of 1-3 wt.% from the weight of perfluoroethyl perfluoroisopropyl ketone.

28. The method of claim 19, wherein said method is adapted to prepare a microcapsule with the outer diameter in the 50-400 mcm range.

29. The method of claim 19, wherein said method is adapted to prepare a microcapsule with the core comprising a fire-extinguishing liquid in the amount of 75-95% of the weight of the microcapsule.

30. A microencapsulated fire-extinguishing agent, which is a powder of microcapsules comprising a fire-extinguishing liquid, wherein said powder comprises microcapsules of any of claims 1-14.

31. A fire-extinguishing composite material comprising a microencapsulated fire-extinguishing agent dispersed in cured resin or cured rubber, wherein said fire-extinguishing composite material comprises the microencapsulated fire-extinguishing agent of claim 30.

32. The material of claim 31, wherein said material is foam.

33. The material of claim 31, wherein said material is a curable paste.

34. The material of claim 31, wherein said material is a structural element.

35. The material of claim 31, wherein said material is a film.

36. The material of claim 31, wherein said material is a fire-extinguishing fabric impregnated or coated with curable paste comprising resin or rubber with a fire-extinguishing agent of claim 30 dispersed therein.

37. A fire-extinguishing coating as paint, comprising the fire-extinguishing agent of claim 30 dispersed therein.

38. A fire-extinguishing article for the preventive protection of objects from fire, equipped with a fire-extinguishing element fixed on the surface of a bearing component and containing a reactive microencapsulated fire-extinguishing agent of claim 30, set in a polymer matrix; wherein said article has such spatial configuration that when said article is arranged in the object to be protected, the largest surface area of the fire-extinguishing element is situated in the zone to be protected or adjacent thereto.

39. The fire-extinguishing article of claim 38, wherein the polymer matrix of the fire-extinguishing element is prepared from a material selected from the group comprising: cold-cured silicon rubber, styrene-butadiene rubber, polyvinyl acetate, polyvinyl alcohol, cold-cured rubber-reinforced epoxy resins, polyester resins, alkyd pentaphthalic enamels, and alkyd glyptal enamels.

40. The fire-extinguishing article of claim 38, wherein said article is detachable.

41. The fire-extinguishing article of claim 40, wherein the bearing element is an article made from a material selected from the group comprising: heat-resistant glass, metals, ceramics, elastic polymers, flexible polymers, magnetic rubber, magnetic-powder-containing polymers, fiberglass, woven and nonwoven fabrics, and carbon fabrics.

42. The fire-extinguishing article of claim 40, wherein said article is one-sided adhesive or double-sided adhesive.
